# EUROPEAN PATENT SPECIFICATION

(11) **EP 1 467 884 B1**
(45) Date of publication and mention of the grant of the patent: **29.04.2009**
(21) Application number: 02788235.6
(22) Date of filing: 20.12.2002
(51) Int. Cl.: B60J 10/00

(54) **COATING SYSTEM FOR FLEXIBLE EXTRUSIONS**
BESCHICHTUNGSSYSTEM FÜR FLEXIBLE, EXTRUDIERTE OBJEKTE
SYSTEME D'ENDUCTION POUR EXTRUSIONS SOUPLES

(30) Priority: 20.12.2001 GB 0130501
(43) Date of publication of application: 20.10.2004
(73) Proprietor: WHITFORD PLASTICS LIMITED, Runcorn, Cheshire WA7 1ST (GB)
(72) Inventor: SYDES, Daniel, F., E., Whitford Plastics Limited, Cheshire WA7 1ST (GB); GROLYS, Andrew, J.,, Staffordshire ST7 1EN (GB)
(74) Representative: Rees, David Christopher
(86) International application number: PCT/GB2002/005876
(87) International publication number: WO 2003/053728

(56) References cited:
- DE-A- 19 619 999
- GB-A- 2 355 480
- US-A- 4 635 947
- US-A- 5 637 292

## Description

The present invention is concerned with a flexible scaling system according to the preamble of claim 1. A seating system of this type is known from US 4635 947A.

Automotive sealing systems are manufactured from a range of synthetic rubbers and manufactured thermoplastic materials, generally by extrusion. The most common synthetic rubber is EPDM (Ethylene Propylene Diene Monomer) while the thermoplastics tend to be Thermoplastic Elastomers (TPEs), Thermoplastic Olefins (TPOs) or Thermoplastic Vulcanisate (TPVs). Whether they are to form glass-run channels, weatherstrip or belt-line seals, they all require a coating to be applied to their surface in order to improve the mechanical, chemical and physical properties of the seal.

Presently, the coating systems used are based upon polyester flocculated fibres, polyurethane or silicone resin systems or combinations thereof. The polyester flocculated fibres are bonded to the seal surface by means of a heat-activated adhesive.

The polyurethane and silicone resin materials can be dispersions and/or solutions in deionised water or organic solvent blends. These resins are typically crosslinked, usually employing isocyanate monomers to develop the physical and mechanical properties of the cured coatings.

The lubricant species utilised within the present coatings are primarily either PTFE (PolyTetraFluoroEthylene) or silicone, supplied in dispersion, solution or micropowder form.

The coating formulations are applied by conventional spray, brushing, wiping and dipping techniques. The cure activation mechanism is physical heating of the seal component via combinations of either hot air, IR (light frequency) and or UHF (particle frequency), and is provided by tunnel ovens, of between 10 to 40 metres in length. The cure time for these existing coating systems are typically between 1 and 15 minutes, depending upon the oven facilities available.

It is an object of the present invention to provide a coating system for a flexible extrusion which does not require a long curing time and which can therefore avoid the use of lengthy tunnel ovens.

According to the invention, there is provided a coating formulation for a flexible thermoplastic extrusion, the coating formulation which comprises a curable resin and a solvent or dispersant for the resin, and in which the resin is a UV curable resin. The resin is a PUD (polyurethane dispersion) and the solvent/dispersant is water. The formulation includes a photoinitiator and, preferably, a cross-linking agent and preferably also a friction-reducing agent.

Preferably the PUD is a aliphatic waterborne resin or a mixture of such resins. Examples include Neorad R440, Neorez R600 of which a mixture of both is particularly preferred.

The photoinitiator activates the cross-linking of the PUD dispersion when, exposed to UV light of 200-400nm (UVA, UVB and UVC) to form a dry, flexible film bonding it to the substrate.

Suitable photoinitiators include Irgacure 184 and others. A preferred photoinitiator might be 1-[4-(2-Hydroxyethoxy)-phenyl]-2-hydroxy-2-methyl-1-propane-1-one (Irgacure 2959).

The friction-reducing agent is preferably PTFE, which is preferably in the form of a micropowder which has an average particle size of 8µm. A particularly preferred friction-reducing agent is Fomblin FE2O EG, an aqueous microemulsion based on perfluoropolyether.

The formulation may also include one or more wetting agents, surfactants and pigments. Suitable wetting agents include i.) Silicone polyester acrylate Tegorad 2200N, Slip and Flow additive, ii.) Polyether siloxane copolymer Tegoglide 450. Suitable surfactants include FC430, Zonyl FSG, Tinuvin 292, Tinuvin 1130 and Tinuvin 144.

The PUD may represent from 40 to 80 wt%, preferably 60 to 80 wt%, more preferably 40 wt% of the formulation, excluding the solvent/dispersant.

The photoinitiator may represent 1 to 5 wt%, preferably 3 to 5 wt%, more preferably 3 wt% of the formulation, excluding the solvent/dispersant.

The friction reducing agent may represent 5 to 30 wt%, preferably 10 to 25 wt%, more preferably 10 wt% of the formulation, excluding the solvent/dispersant.

The PUD may be present in the solvent/dispersant in a concentration of from 38 to 32 wt%, preferably 40 to 41 wt%, for example NeoRad R440 or NeoRez R600 (aliphatic waterborne urethanes manufactured by NeoResins) of which a mixture of both is particularly preferred.

The formulation may be applied to the extruded product continuously, on extrusion, or may be applied to the product after forming to shape. It may be applied by any suitable method, eg. by application by hand spray and automated spray application, brushing, wiping, dipping.

Suitable UV sources included UVA 315-400nm, UVB 280-315nm, UVC 200-280nm. A preferred source is UV A, B, C. Curing of the resin may take from 1 to 2 seconds but typically, full curing may take less than 1 second. Furthermore, curing may be effected at ambient temperatures. Thus the system of the invention substantially reduces the cure oven length and cure time and allows the formation of a tough, flexible, low friction film by curing the coating in <1 second, compared to traditional curing requirements of 1-15 mins @ between 150-180°C. The coating may have coefficient of dynamic friction value <0.9, and a coefficient of static friction value <0.9, and its properties include good solvent resistance, flexibility, water resistance, freeze-release properties, heat and humidity resistance. It may be applied to extruded profiles made from Thermoplastic Elastomers (TPE), Thermoplastic olefins (TPO) and Thermoplastic Vulcanisates (TPV). Preferably, the coating is applied to a TPE extruded substrate.

In a particularly preferred form, the invention provides a formulation which combines the use of a perfluropolyether with a UV curable waterborne PUD resin based system, suitable for application by spraying, brushing, wiping, dipping etc., that, when applied onto the aforementioned substrates, offers a flexible film with elasticity of >100%, preferably 120% or even 150%, in extension, whilst retaining the mechanical and chemical resistant properties outlined above. In contrast, existing UV cured coatings are limited to applications where elasticity of the coating film is not required, and in many cases avoided. The present invention is capable of formulating a tough, but highly flexible UV cured coating having repeatable flexibility for application on dynamic sealing systems applications, across a wide range of substrates.

In a preferred embodiment, the present invention provides a coating formulation which has application in sealing systems where the aim is to provide a seal having a coating which retains its flexibilty through repeated flexing and deformation of the seal. This high degree of repeatable flexibility of the coating is of particular importance in "weatherstrip" seals, which include, *inter alia,* automotive door, bonnet (hood) and boot (trunk) seals, that are exposed to repeated structural compression and release.

The present invention exhibits various further advantages. As continuing environmental assessments are forcing lower VOC limits, the UV coatings of the present invention have low or zero solvent emissions by using water as the solvent/dispersant.

The formulation can be provided as a 1-pack spray applied system, which has increased pot-life compared to a 2 pack cross-linked coating, as used in prior art systems. Online set up waste is greatly reduced, coating inspection/thickness measurement can be measured seconds after curing compared to 3 minutes curing time for conventional curing, greatly reducing coating and substrate waste.

Smaller production facilities are required. Current state of the art systems employ tunnel ovens with a typical length of between 10 and 40 metres. The present invention requires a two metre long enclosed light source, thereby reducing extrusion line lengths by a factor of, at least, 5. The system may also result in lower energy costs compared to convention, IR or microwave curing ovens. New equipment can easily be fitted to existing production lines.

The recent increase in environmental awareness has resulted in a trend towards a greater use of recyclable materials. This trend is particularly evident in the automotive industry where there is pressure being placed on manufacturers to replace rubber and plastics applications with recyclable materials. The present invention provides a further advantage in that the coating formulations have application in the coating of thermoplastic materials which can be recycled.

The invention may also allow increased use of TPE's, polymers which combine the service properties of elastomers with the processing properties of thermoplastics, as the substrate material in the future. These include:
i.) Blends of rubbers with thermoplastics (EPDM and Polypropylene (PP) and Natural rubber/Polypropylene (NR/PP))
ii.) Soft block copolymers
iii.) Hard block copolymers

Temperature sensitive materials such as TPEs, TPVs and TPOs require low temperature curing at about 100°C to prevent distortion of their surface or mechanical properties. This is presently achieved by using a catalysed cross-linked system. There are Health & Safety issues with organotin catalysts used. However, UV curing is carried out at ambient temperatures resulting in a substrate temperature of about 40° C which does not result in any obvious alteration or distortion of the surface or mechanical properties of the substrate. This UV curing process can be designed with no temperature increase associated with the curing process (cold-cured systems) if required.

The invention may be carried into practice in various ways and some embodiments will now be illustrated in the following examples.

### Example 1

An EPDM extruded substrate was subjected to a pre-treatment consisting of the application of a solvent-based primer. A formulation X was made up by mixing:

| | |
|---|---|
| | % |
| PUD (NeoRad R-440) | 60.0 (40% solids) |
| PUD (NeoRez R-600) | 20.0 (40% solids) |
| Fluorinated polyether | 10.0 |
| Photoinitiator A or B (see below) | 3.0 (equates to 40% solution) |
| N-methyl-2-pyrrolidone (NMP) | 4.0 |
| Wetting agents | 3.0 |

The formulation X was applied to an off-line sample of the substrate to a WFT (wet film thickness) of 15-20µ. Water was removed by heating for 2 minutes at 120 to 150°C. UV curing was then effected by exposure to a UVA, UVB, UVC mercury lamp UV source for 1.0 second. The coating was found to have a DFT (day film thickness) of about 15µ. It was well adhered and resistant to abrasion while remaining flexible and of low friction.

### Photoinitiators

A. Coating contains 2 photoinitiators (Irgacure 184: Irgacure 819) in a [1:1] mixing (w/w/):
   Irgacure 184
   CAS 947-19-3
   1-Hydroxy-cyclohexyl-phenyl-ketone 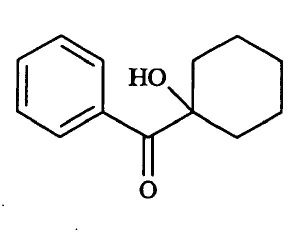 Irgacure 819
   CAS 162881-26-7
   B1S (2,4,6 - trimethylbenzoyl)-phenylphosphineoxide 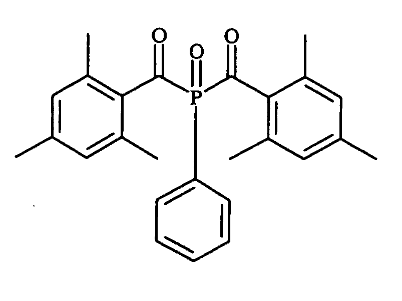
B. Coating contains one photoinitiator (Irgacure 2959):
Irgacure 2959
CAS 106797-53-9
1-[4-(2-Hydroxyethoxy)-phenyl]-2-hydroxy-2-methyl-1-propane-1-one

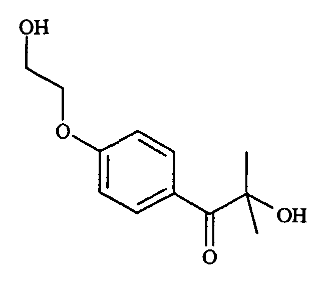

### Example 2

A TPE extrusion was pretreated by corona discharge on leaving the extruder and then sprayed with a formulation X (See Example 1 for details). The formulation was sprayed to a WFT of 15-20µ. The extruded substrate had an inherent temperature of about 100°C and so no separate water removal was necessary. The sprayed substrate was exposed to the same UV source at a speed of 10 to 20 m/min. This produced a fully cured coating with a DFT of about 15µ after less than 1 second exposure to the UV source.

### The UV Process

As UV light energy is emitted, it is absorbed by the photoinitiator in the mobile coating (the "wet" coating film), causing it to fragment into reactive species (free radicals). Free radicals react with the unsaturated compounds in the liquid formulation, resulting in polymerisation.

### Mechanism (applies to all photoinitiators)

### Steps

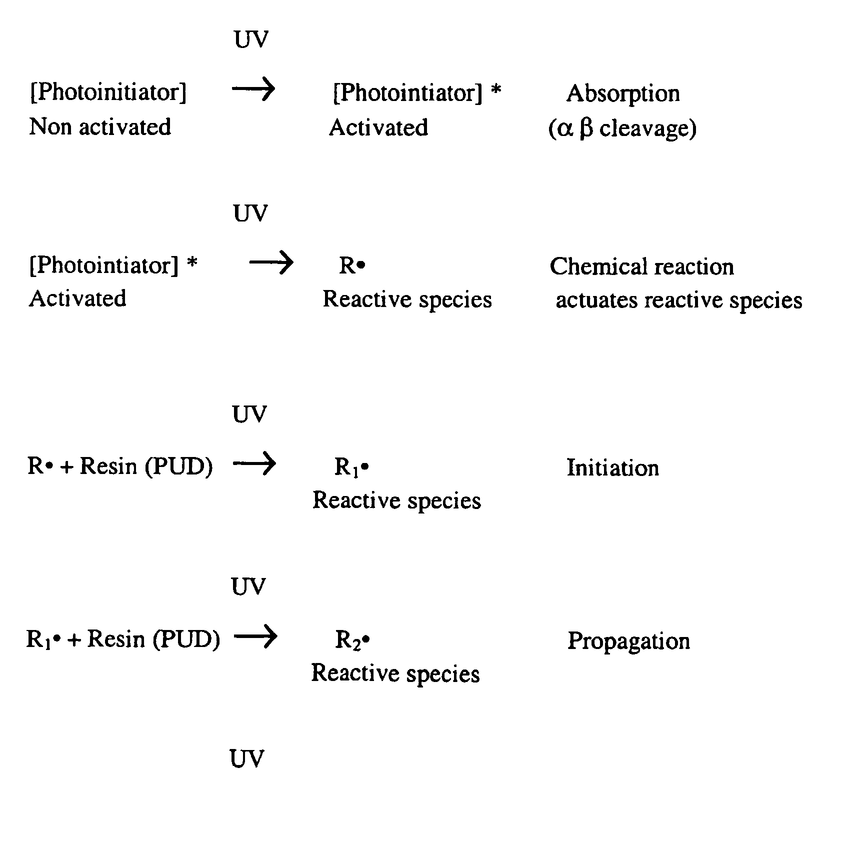

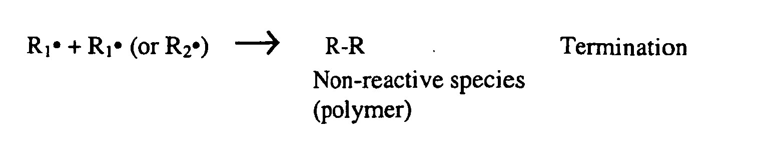

## Claims

1. A flexible sealing system for automotives comprising a coating formulation comprising a UV curable resin and a photoinitiator, **characterised in that** the coating formulation is applied to a flexible thermoplastics extrusion, the resin comprises a water based polyurethane dispersion (PUD) and the photoinitiator is arranged to activate cross-linking of the resin when exposed to UV light with a wavelength in the range 200 to 400 nm.

2. A sealing system as claimed in claim 1, wherein the extrusion is a Thermoplastic Elastomer (TPE) extrusion.

3. A sealing system as claimed in any preceding claim, wherein the formulation includes a friction-reducing agent.

4. A sealing systems as claimed in any preceding claim, wherein the resin represents from 40 to 80 wt% of the formulation excluding the dispersant.

5. The use of a coating formulation comprising a UV curable resin and a photoinitiator in coating a flexible thermoplastics extrusion, the resin comprising a water based polyurethane dispersion (PUD) and the photoinitiator being arranged to activate cross-linking of the resin when exposed to UV light with a wavelength in the range 200 to 400 nm.

6. A use as claimed in claim 5, wherein the extrusion is a Thermoplastic Elastomer (TPE) extrusion.

## Patentansprüche

1. Flexibles Dichtungssystem für Kraftfahrzeuge, welches eine Beschichtungsformulierung umfasst, welche ein UV-härtbares Harz und einen Photoinitiator umfasst, **dadurch gekennzeichnet, dass** die Beschichtungsformulierung auf ein flexibles Thermoplast-Extrudat aufgetragen wird, das Harz eine auf Wasser basierende Polyurethandispersion (PUD) umfasst und der Photoinitiator vorgesehen ist um Vernetzung des Harzes zu aktivieren, wenn er UV-Licht mit einer Wellenlänge im Bereich von 200 bis 400 nm ausgesetzt ist.

2. Dichtungssystem wie in Anspruch 1 beansprucht, worin das Extrudat ein thermoplastisches Elastomer (TPE)-Extrudat ist.

3. Dichtungssystem wie in einem vorhergehenden Anspruch beansprucht, worin die Formulierung ein Verschleißschutzmittel einschließt.

4. Dichtungssystem wie in einem vorhergehenden Anspruch beansprucht, worin das Harz von 40 bis 80 Gew.-% der Formulierung unter Ausschluss des Dispergiermittels darstellt.

5. Verwendung einer Beschichtungsformulierung, welche ein UV-härtbares Harz und einen Photoinitiator umfasst, beim Beschichten eines flexiblen Thermoplast-Extrudats, wobei das Harz eine auf Wasser basierende Polyurethandispersion (PUD) umfasst und der Photoinitiator angeordnet ist um Vernetzung des Harzes zu aktivieren, wenn er UV-Licht mit einer Wellenlänge im Bereich von 200 bis 400 nm ausgesetzt ist.

6. Verwendung wie in Anspruch 5 beansprucht, worin das Extrudat ein thermoplastisches Elastomer (TPE)-Extrudat ist.

## Revendications

1. Système d'étanchéification souple pour automobiles comprenant une formulation de revêtement comprenant une résine durcissable aux UV et un photo-inducteur, **caractérisé en ce que** la formulation de revêtement est appliquée à une extrusion thermoplastique souple, la résine comprend une dispersion de polyuréthane à base d'eau (PUD) et le photo-inducteur est disposé pour activer une réticulation de la résine lors d'une exposition à de la lumière UV avec une longueur d'onde dans la gamme 200 à 400 nm.

2. Système d'étanchéification selon la revendication 1, dans lequel l'extrusion est une extrusion d'élastomère thermoplastique (TPE).

3. Système d'étanchéification selon l'une quelconque des revendications précédentes, dans lequel la formulation comprend un agent réducteur de frottement.

4. Système d'étanchéification selon l'une quelconque des revendications précédentes, dans lequel la résine représente de 40 à 80 % en poids de la formulation, dispersant exclu.

5. Utilisation d'une formulation de revêtement comprenant une résine durcissable aux UV et un photo-inducteur dans le revêtement d'une extrusion thermoplastique souple, la résine comprenant une dispersion de polyuréthane à base d'eau (PUD) et le photo-inducteur étant disposé pour activer une réticulation de la résine lors d'une exposition à de la lumière UV avec une longueur d'onde dans la gamme 200 à 400 nm.

6. Utilisation selon la revendication 5, dans laquelle l'extrusion est une extrusion d'élastomère thermoplastique (TPE).
